(19) Europäisches Patentamt
European Patent Office
Office européen des brevets

(11) **EP 2 902 606 B1**

## (12) EUROPEAN PATENT SPECIFICATION

(45) Date of publication and mention
of the grant of the patent:
**02.01.2019 Bulletin 2019/01**

(51) Int Cl.:
***F02C 7/228*** *(2006.01)*   ***F02C 9/28*** *(2006.01)*

(21) Application number: **14153478.4**

(22) Date of filing: **31.01.2014**

---

(54) **Method for operating a gas turbine at part load**

Verfahren zum Betreiben einer Gasturbine in Teillast

Procédé pour faire fonctionner une turbine à gaz à charge partielle

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.08.2015 Bulletin 2015/32**

(73) Proprietor: **Ansaldo Energia IP UK Limited
London W1G 9DQ (GB)**

(72) Inventors:
• **Zhang, Mengbin
8112 Otelfingen (CH)**

• **Therkorn, Dirk
79761 Waldshut (DE)**
• **Bernero, Stefano
5452 Oberrohrdorf (CH)**
• **Kenyon, Michael
5400 Baden (CH)**

(74) Representative: **Bernotti, Andrea et al
Studio Torta S.p.A.
Via Viotti, 9
10121 Torino (IT)**

(56) References cited:
**EP-A2- 1 367 328      EP-A2- 2 423 489
US-A1- 2004 093 147   US-A1- 2011 265 486**

---

## Description

### Technical field

The invention refers to a method for operating a gas turbine at part load while keeping the CO emissions below a limit value. The invention additionally refers to a gas turbine configured to carry out such a method.

### Background of the disclosure

Renewable energy accounts for an ever increasing proportion of the energy production. A consequence of this is that conventional power plants are required to operate more flexibly. Turn down ratio, the ratio of base load to minimum emissions compliant load, is therefore a key feature for conventional gas fired power plants. CO emissions are limiting criteria for low load operation of a gas turbine as they increase rapidly with lower firing temperatures normally associated with reduced power.

There are various measures to extend the operating range of a gas turbine into a lower load range and remain CO emission compliant. However, for any measure, there is a low load limit under which specified CO emission limits are exceeded. The CO emissions at a certain load are not constant as they vary with the ambient conditions, the fuel compositions, fuel temperatures and ageing of the engine.

In a conventional operating method a minimum load is defined at which the requirements with respect to CO emissions are fulfilled. Such a minimum load (referred to as "CO min load" later in this description) in the engine operation concept is setting a relative load with a certain margin to the load at which CO emissions are exceeding the limit. Due to this margin, the operating range is reduced resulting in reduced profitability of the gas turbine. Another possible concept to control the CO min load is using a CO feedback controller. This concept allows more flexibility but has a big barrier due to the measurement delay of the CO signal of approx. 3-5 minutes. This CO feedback controller has to trade off between fast response and stability.

### Summary of the disclosure

It is an object of the claimed invention to provide a method for operating a gas turbine CO emission compliant at low part loads with increased profitability.

This object is achieved by the method of claim 1, the CO min load controller of claim 10 and the depending sub-claims.

The claimed method comprises calculating a representative hot gas temperature THG and maintaining this representative hot gas temperature THG above a minimum hot gas temperature THGmin by tuning the minimum load set point of the load control by means of a feedback controller. The feedback controller will increase the minimum load set point if the hot gas temperature THG is lower than the minimum hot gas temperature THGmin and inversely, the feedback controller will decrease the minimum load set point if the hot gas temperature THG is higher than the minimum hot gas temperature THGmin.

Patent publication EP 2 423 489 A2 discloses a method for controlling fuel splits to a gas turbine combustor. In particular, the method includes determining a combustion reference temperature of the gas turbine and operating the regulation, that is adjusting the nominal fuel split schedule, based on said combustion reference temperature.

According to an embodiment a controller switches off at least one burner and/or adjusts a fuel staging parameter when the difference between the hot gas temperature and the minimum hot gas temperature becomes negative. The controller switches on at least one burner and/or readjusts a fuel staging parameter when the difference between the hot gas temperature and the minimum hot gas temperature exceeds a threshold value. The threshold value can be chosen big enough to assure that after the readjustment of the staging parameter or switching on of the burner the CO emissions are still below the minimum allowable CO emissions.

An adjustment in fuel staging can be a change in fuel supply to different burners or a shift in fuel supply to different fuel injection locations or systems within a burner. An adjustment in fuel staging can for example be realized by adjusting the fuel split between different burner stages, the fuel split between different burner groups, the fuel split between different combustor stages, the fuel split between different combustors or the fuel split between different burners. By adjusting the fuel staging parameter the burner or section of burner which is critical for CO emissions at given operating conditions can be supplied with more fuel while the fuel supply to an uncritical burner or burner section is reduced. Thereby the overall CO emissions can be reduced.

A readjustment can be a carried out to when the hot gas temperature is sufficiently high again. Readjustment in this context can be for example reversal of the change in fuel distribution which was carried out during the adjustment.

The burner switching and/or change in staging parameters can be carried out independently of or in combination with increasing, respectively decreasing of the minimum load. According to one embodiment first at least one burner is switched off and/or a staging parameter is changed before the minimum load is reached and then increased or decreased.

At the same time or sequentially an adaptive control algorithm is applied to adjust the single control parameter minimum hot gas temperature THGmin, but only at the suitable operation conditions (e.g. steady state operation, at the CO min load operation point) and with validated measurement input (redundant CO measurements and with respect to measurement delay time). Redundant CO measurement can improve the reliability of the above method and system and can involve an adaptive control with measured CO values.

The described hot gas temperature THG and minimum hot gas temperature THGmin parameters and adaptive control concept may be used not only to adjust the CO min load but also other measures affecting CO emissions at part load such as switching off of individual burners or burner groups, or other fuel redistribution measures have been carried out (for example "EV staging" in which the internal burner fuel distribution is readjusted, burner grouping, or redistribution of fuel between different sequential stages or combustors).

Further advantages are explained in detail in conjunction with the drawing.

## Brief description of the drawings

The disclosure, its nature as well as its advantages, shall be described in more detail below with the aid of the accompanying schematic drawings.

Referring to the drawings:

FIG. 1 shows a gas turbine with sequential combustion,

FIG. 2 shows a section through the second combustor of a gas turbine with sequential combustion

FIG. 3 shows a diagram illustrating the CO emission as a function of the hot gas temperature THG of a gas turbine;

FIG. 4 shows a block diagram of claimed the method;

FIG. 5 shows an adaptive algorithm for resetting a lower limit of the hot gas temperature THG and

FIG. 6 shows the effect of the adaptive algorithm on hot gas temperature THG and CO emissions.

## Exemplary Embodiments

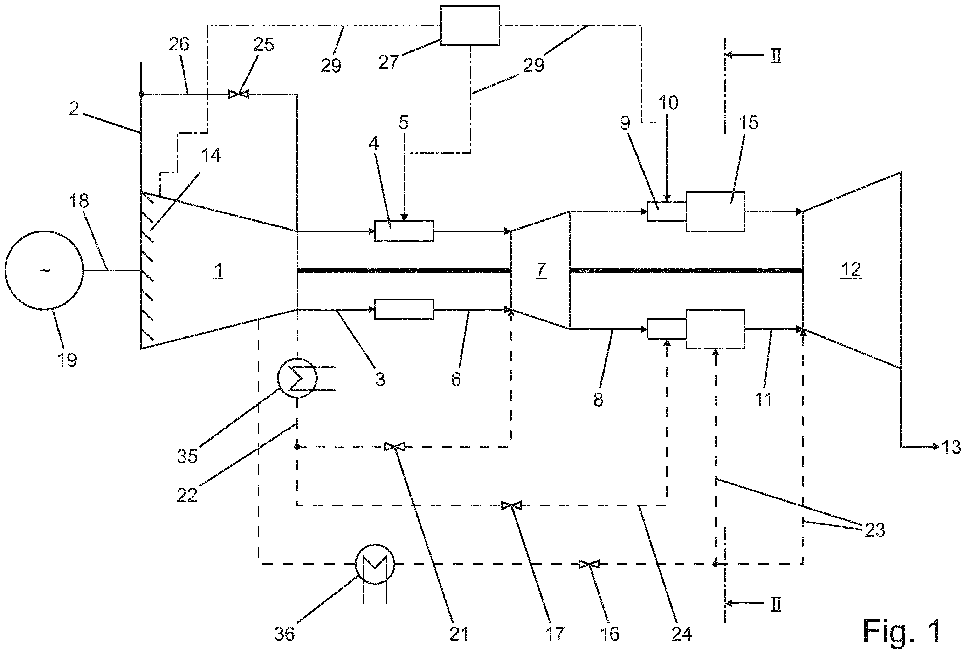

FIG. 1 shows as an example of a gas turbine with sequential combustion useful for implementing methods as described herein. The claimed method may be applied not only to this type of gas turbine but to any other type of gas turbine for example with non-sequential combustor or staged combustion.

The gas turbine includes a compressor 1, a first combustor 4, a first turbine 7, a second combustor 15, and a second turbine 12. Typically, it includes a generator 19 which, at the compressor 1, is coupled to a shaft 18 of the gas turbine.

A fuel, gas or oil, is introduced via a fuel feed 5 into the first combustor 4, mixed with air which is compressed in the compressor 1 and combusted in one or several burners (not shown in figure 1). The hot gases 6 exiting the burners and the first combustor 4 are partially expanded in the subsequent first turbine 7 performing work.

As soon as the second combustor 15 is in operation due to an increase of load, additional fuel, via a fuel feed 10, is added to the partially expanded gases 8 in burners 9 of the second combustor 15 and combusted in the second combustor 15. The hot gases 11 are expanded in the subsequent second turbine 12 performing work. The exhaust gases 13 can be beneficially fed to a waste heat boiler of a combined cycle power plant or to another waste heat application.

For controlling the intake mass flow, the compressor 1 has at least one row of variable inlet guide vanes 14.

In order to be able to increase the temperature of the intake air 2 on cold days with high relative air moisture in the ambient air, provision is made for control valve 25 and an anti-icing line 26 through which some of the compressed air 3 can be added to the intake air 2.

Some of the compressed air 3 is tapped off as high-pressure cooling air 22, recooled via a high-pressure cooling air cooler 35 and fed as cooling air 22 to the first combustor 4 (cooling air line is not shown) and to the first turbine. The mass flow of the high-pressure cooling air 22, which is fed to the high-pressure turbine 7, can be controlled by a high-pressure cooling air control valve 21 in the example. Some of the high-pressure cooling air 22 is fed as so-called carrier air 24 to the burner lances of the burners 9 of the second combustor 15. The mass flow of carrier air 24 can be controlled by a carrier-air control valve 17.

Some of the air is tapped off, partially compressed, from the compressor 1, recooled via a low-pressure cooling air cooler 36 and fed as cooling air 23 to the second combustor 15 and to the second turbine 12. The mass flow of cooling air 23 can be controlled by a cooling-air control valve 16 in the example.

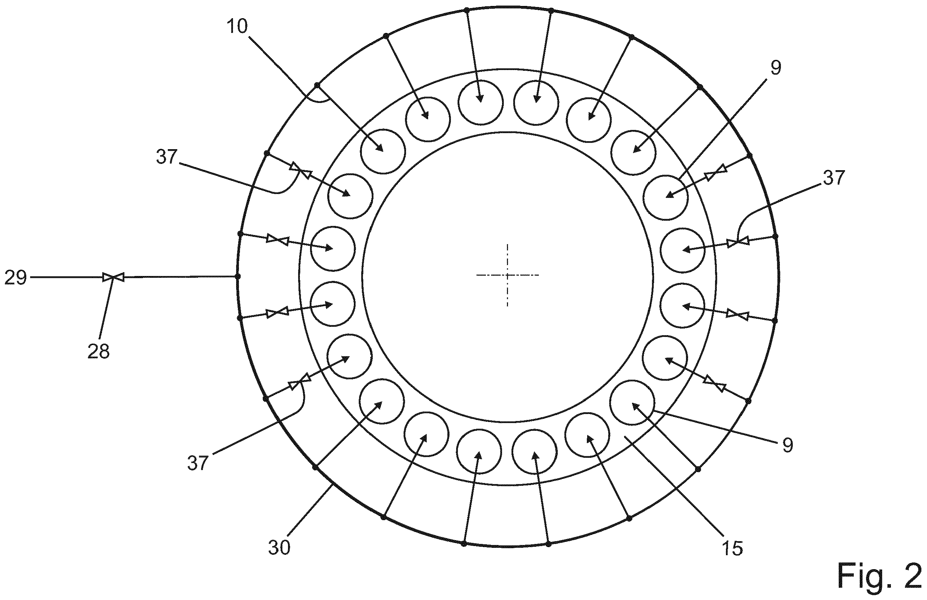

The combustors 4 and 15 are constructed as annular combustors, for example, with a large number of individual burners 9, as is shown in FIG. 2 by way of example of the second combustor 15. Each of these burners 9 is supplied with fuel via a fuel distribution system and a fuel feed 10. In this example the fuel distribution system has a main fuel ring 30, a control valve 28 for controlling the overall fuel mass flow and eight on/off valves 37 for deactivating the respective eight burners 9.

A main controller 27 is connected among other components with the variable inlet guide vanes 14, the fuel feeds 5 and 10 for controlling the power or load of the gas turbine. The signal lines that connect the main controller 27 with the variable inlet guide vanes 14, the fuel feeds 5 and 10 bear the reference numeral 29.

By closing individual on/off valves 37, the fuel feed to individual burners 9 is stopped and is distributed to the remaining operative burners 9. As a result, the air-fuel equivalence ratio $\lambda$ of the burners 9 in operation is decreased and the hot gas temperature is raised.

Apparently each of the operative burners of the first combustor 4 and the operative burners 9 of the second combustor 15 produce hot exhaust gases.

With regard to the claimed invention either the temperature of the hot gases 6, 11 at the exit of burners of the first combustor 4 or the second combustor 15 is designated as hot gas temperature THG. Apparently the local hot gas temperatures THG may differ between the operative burners. The calculated hot gas temperature THG can be adjusted to take these local differences into account. For this adjustment the calculated hot gas temperatures THG can be adjusted as a function of at least one of the following parameters:

- the number of burners in operation
- the fuel split between different burner stages
- the fuel split between different burner groups
- the fuel split between different combustor stages
- the fuel split between different combustors
- the fuel split between different burners

As mentioned before the claimed method may be applied not only to this type of gas turbine but to any other type of gas turbine for example with non-sequential combustor or staged combustion.

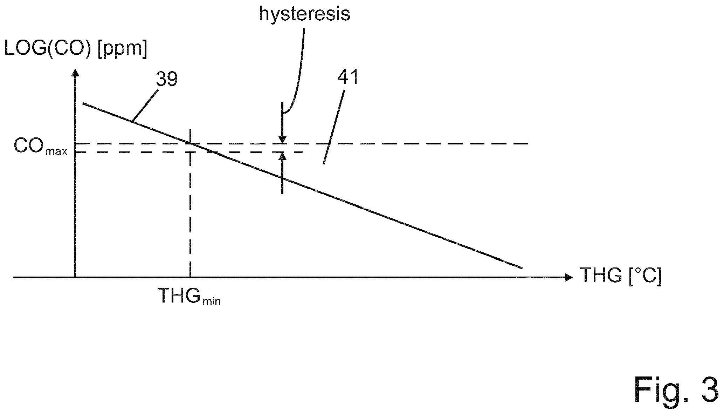

It is known that, for premix combustion, the CO increases in an approximately exponential way with decreasing of the hot gas temperature THG as shown in Figure 3. Since the Y-axis of figure 3 uses a logarithmic scale, the line 39 in figure 3 is thus more or less straight.

The rectangular area 41 limited by the maximum allowable CO emission $CO_{max}$ and the minimum hot gas temperature THGmin is the range of operation of the gas turbine. The maximum allowable CO emissions $CO_{max}$ is a limit that may not be exceeded.

Based on the exemplary function illustrated in figure 3 the CO emission can be approximated using the subsequent equation:

$$CO = \eta \; e^{-\gamma \; THG} \qquad\qquad (a)$$

wherein $\gamma$ and $\eta$ are constants which can be empirically found to best match the specific gas turbine's CO emission characteristic.

Turned the other way around for a maximum allowable CO emission value $CO_{max}$, a lower limit of the hot gas temperature THGmin may be approximated by:

$$THGmin = \log(COmax \; / \; \eta)^{-\gamma} \qquad (b)$$

Under normal conditions the load of the gas turbine is controlled mainly by controlling the fuel mass flow to the at least one combustor 4, 15 and/or the position of the variable inlet guide vanes 14.

Details of operating a gas turbine are described in EP 2 600 063 A2. Since the normal control scheme is known to a man skilled in the art, it is not explained in detail.

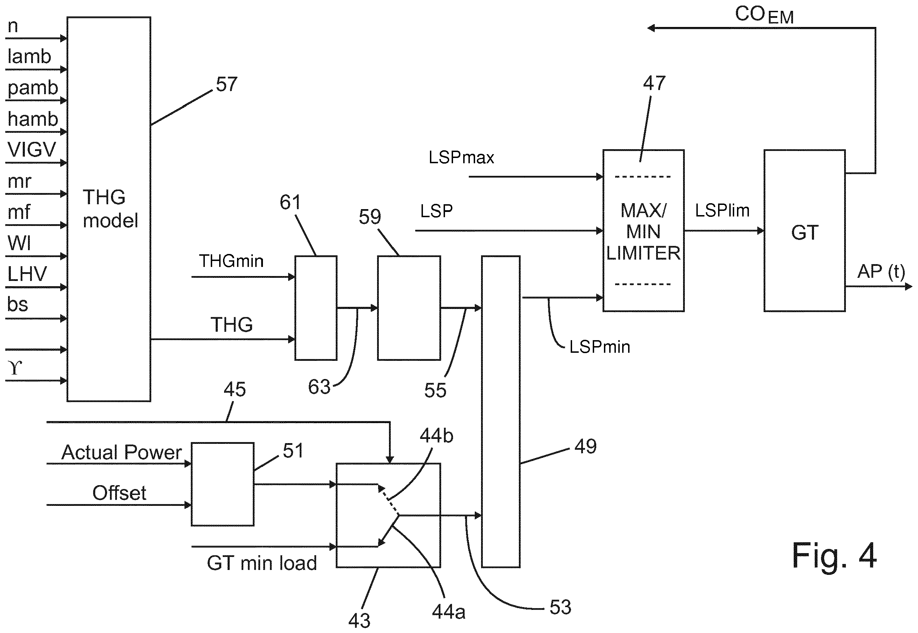

Figure 4 illustrates a part of the claimed CO min load control for operating the gas turbine at low load with compliant and preferably low CO emissions. It is a model based control that is activated in case that normal operation or load control of the gas turbine might lead to inacceptable high CO-emissions. The claimed CO min load control may be integrated into the main controller 27 (see figure 1) or may be a separate controller.

The claimed control method shown in Figure 4 is robust against varying ambient conditions, fluctuation of grid frequency, changes of the operation concept (VIGV position) and fuel gas composition in terms of Wobbe index or low heating value changes, as long as the composition is measured online and used to correspondingly correct the hot gas temperature THG calculation formulas of the model. However, there are cases in which the CO model can deviate from the real CO values, such as changes in fuel composition that affect not only the hot gas temperature THG but also combustion kinetics relevant for CO (e.g. effect of C2+ on ignition delay time), aging of GAS TURBINE hardware (e.g. leading to different air distribution), extreme conditions or operation modes and/or faulty or missing input signals, lead to inaccurate results of the model-based determination of the hot gas temperature THG.

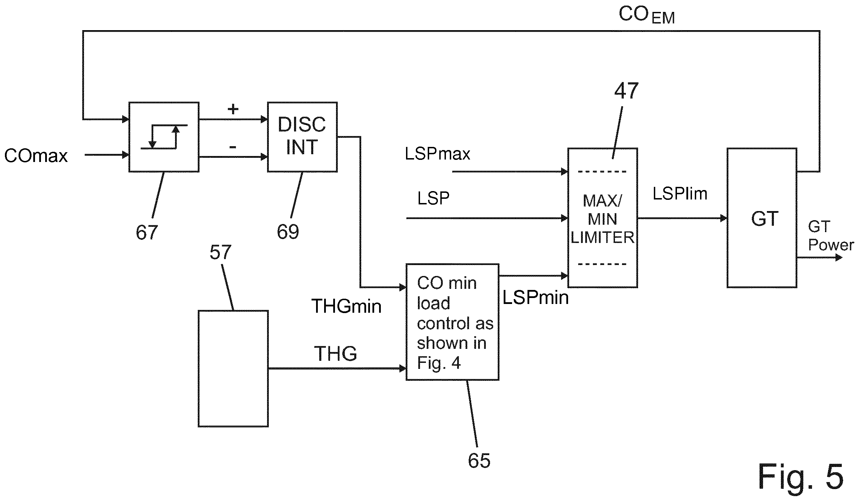

These cases are addressed through a feedback loop with measured CO in the exhaust gas of the gas turbine. This concept shown in figure 5 introduces an adaptive algorithm to update and correct the limit $THG_{min}$ in order to keep the CO emission under the COmax limit and remain in a range with a hysteresis.

The model based CO min load control shown in figure 4 and the adaptive algorithm shown in figure 5 may be executed simultaneously or sequentially.

The claimed CO min load control shown in figure 4 comprises a switch 43. Under regular load control of the main controller 27 (i.e. the claimed CO min load control is not active) the switch 43 is in the position as shown in figure 4.

The switch 43 is activated by a binary signal 45 from the main controller 27 of the gas turbine control once the gas turbine reaches a low load operating point - also referred to as the CO min load status - is reached.

For operation with reduced number of individual burners in operation, if the minimum number of burners in operation is reached, the claimed CO min load control will be set active by the binary signal 45 and it reads the actual power output $AP_0$ of the gas turbine as a reference for the CO min load controller.

The gas turbine load set point (LSP; [MW]) is controlled by the CO min load controller, based on the calculated hot gas temperature THG, if the CO min load control is active.

In case of the gas turbine explained in figures 1 and 2 the load controller 27 tunes all fuel control valves 28, 37 and variable inlet guide vane (VIGV) positions to follow the Load Set Point (LSP; [MW]) according to the regular operation concept which is always active. If the claimed CO min load control is active the CO min load controller tunes the Load Set Point (LSP).

The CO min load controller is activated, for example, if the hot gas temperature THG of the second combustor 15 reached the predefined the minimum level $THG_{min}$ (see fig. 3). For other types of gas turbines a different criteria for activating and deactivating the claimed CO min load control may be applied. A person skilled in the art may select appropriate criteria for each type of gas turbine.

Starting now from the end respectively the result of the load control in figure 4 at the right hand side the output LSPmin of a maximum-minimum limiter 47 can be seen.

The input LSP that enters the maximum-minimum limiter 47 is submitted by the main controller 27. This maximum-minimum limiter 47 sets the upper and lower limit of the load set point $Load_{SP}$ of the load control of the main controller 27. The set point limits of the limiter 47 are abbreviated by LSPmax for the maximum and LSPmin for the minimum.

The load set point ($Load_{SP}$) that enters the maximum-minimum limiter 47 and is part of the load control 27 of the gas turbine has to be kept within the limits LSPmax and LSPmin, set by the limiter 47. The limiter 47 ensures that the load set point $load_{SP}$ will not be lower than the minimum load set point LSPmin and not exceed the maximum load set point LSPmax.

The output of the limiter 47 is named LSPlim and is submitted to the gas turbine which in turn produces the respective actual power AP (t), which is a function of time.

According to the claimed invention the minimum load set point LSPmin is adapted to the instantaneous conditions of the gas turbine, allowing operation of the gas turbine with low hot gas temperatures THG producing CO-emissions compliant with the said limit $CO_{max}$ (see figure 3).

As can be seen in figure 4 the minimum load set point LSPmin is derived from two loads 53 and 55 [MW]. By adding these two loads 53 and 55 in a box 49 the minimum load set point LSPmin is generated.

As mentioned before, under normal operation conditions the load switch 43 is in a first position (see the arrow 44a) and consequently the first input 53 to the box 49 is a "fixed" value of the gas turbine minimum load $GT_{min}$ load, of for example 5 MW.

At the moment ($t=T_0$) the switch 43 is activated by a binary signal 45 from the main controller 27 the arrow 44 inside the switch 43 reaches the second position (see the dotted arrow 44b). Consequently the first input 53 to the box 49 is no longer a "fixed" value.

At the moment ($t=T_0$) the actual power AP (t) [MW], which is close to the actual load, of the gas turbine at this moment ($t=T_0$) is taken and stored as a reference load value [MW] that serves as an input for the box 49. To make sure that under no circumstance the minimum load set point LSPmin of the limiter 47 will be too high an offset value [MW] is subtracted from the actual power AP0 (AP(t)|t = $T_0$) and the resulting value will be used as reference value. This subtraction is executed in the box 51. Typically the offset is in the range of 1 to 5% of the actual power.

The offset can serve to avoid any unintended sudden increase in the load set point when minimum load controller is activated.

The output (APO - offset [MW]) of the box 51 is a first input [MW] to the switch 43, which in turn submits it as a first input 53 to the box 49.

To give an example:
The fixed value $GT_{min}$ load may be 5 MW. The actual power AP at the moment ($t=T_0$) the switch 43 is activated by the signal 45 may be 110 MW. If the offset is supposed to be 3 MW, the first input 53 to the box 49 is 110 MW - 3 MW = 107 MW, after the switch 43 has been activated.

The second input 55 to the box 49 is derived from a hot gas temperature model 57 and a controller 59, preferably a PI controller. The controller 59 adjusts the minimum load related to the reference value to remain the hot gas temperature THG equal to THGmin.

The hot gas temperature model 57 calculates or determinates based on one or more model equations and input values the actual hot gas temperature THG of the active burners 9 of the gas turbine.

The input data for the hot gas temperature model 57 are shown in figure 4 and briefly explained in the list of reference numerals.

According to the claimed method the actual hot gas temperature THG is determined without delay by means of a hot gas temperature model 57 and not by sensors. In an exemplary embodiment, the output of the model 57 depends on fuel mass flow, fuel composition, the air mass flow and /or the cooling air mass flow into the combustor of the gas turbine. Additionally, the calculated representative hot gas temperature THG depends on the fuel distribution among the burners or combustors or their stages or groups, as represented by the variable $b_s$. To further simplify the model for the gas turbine application, it is supposed that the air mass flow depends on the rotor speed n, the position of the variable inlet guide vanes (VIGV) and ambient conditions. Based on these assumptions it can be stated that the instantaneous hot gas temperature THG (t) depends on the following variables

$$THG = f\ (n,\ T_{amb},\ p_{amb},\ h_{amb},\ VIGV,\ m_r,\ m_f,\ WI,\ LHV,\ b_s,\ \gamma)\ (1)$$

Other models, more detailed or simpler, may be applied, too.

The output THG of the THG model 57 is compared with a minimum limit of the hot gas temperature THGmin in a subtracting element 61.

The difference 63 between the minimum limit of the hot gas temperature THGmin and the calculated hot gas temperature THG is forwarded to the (PI-) controller 59.

Based on this difference 63, which is a temperature difference [K], the controller 59 calculates a load [MW] which is the second input 55 to the box 49.

As mentioned before by adding the inputs 55 and 53 the minimum load set point LSPmin is generated, which is the lower limit of the limiter 47 that depends on the actual hot gas temperature THG. The minimum load set point LSPmin is continuously controlled by the controller 59 which uses the real-time available results THG of the THG model 57. This means that without any time delay the minimum load set point LSPmin is continuously adapted to meet the CO emission requirements at low hot gas temperatures.

Each time the switch 43 changes its indexing position (see the arrows 44a and 44b) the first input 53 will almost certainly change in a stepwise manner since referring to the example given above the value $GT_{min\ load}$ may be 5 MW and the actual power AP at the time t = $T_0$ may be 110 MW and the offset may be 3 MW, resulting in a change of the input 53 from 5 MW to 107 MW at the time t = $T_0$.

The claimed CO minimum load control depends among others from the actual power AP (t = $T_0$) and the actual hot gas temperature THG determined by the THG model 57.

Consequently, the minimum load set point LSPmin, which is an input of the limiter 47, is adapted to the operation and ambient conditions of the gas turbine. This allows a further reduction of the minimum load set point LSPmin and consequently the hot gas temperature THG without producing CO-emissions that exceed the $CO_{max}$ limit (see figure 3).

The claimed hot gas temperature model 57 uses a somewhat simplified model that does not exactly calculate each and every possible influence, like changes of the fuel, ageing of the gas turbine and the like. As a result due to changes of the fuel, ageing of the gas turbine and the like over a long time period (longer than for example 1 hour) the results (THG) of the THG model 57 may become less exact.

To compensate these long term changes of the gas turbine and to adapt the THG model 57 to these changes an adaptive algorithm of adjusting the hot gas temperature THG is illustrated in figure 5.

Figure 5 is based on figure 4 and focusses on the adaptive part of the claimed method.

In general, the hot gas temperature THG will decrease if the gas turbine is deloading. The CO emission might therefore exceed the specified CO value at the load level LSPmin. As mentioned before that load level is a variable of the ambient condition, gas composition, gas temperature, and also related to the operation concept.

A CO min load control using a simplified model 57 cannot achieve the required accuracy over a long time period and under changing conditions.

Therefore the claimed CO min load control uses a feedback controller 67 to maintain the CO emissions COEM measured in the exhaust gas 13 of the gas turbine below the maximum allowable CO emission COmax by tuning the minimum hot gas temperature THGmin.

A box 65 in figure 5 represents some of the CO min load control components of figure 4, for example the subtracting elements 51 and 61, the (PI-) controller 59, the switch 43 and the box 49.

As explained before, as a result of the CO min load control the limited load set point LSPlim of the limiter 47 is determined. Beside the actual power AP of the gas turbine the CO emissions of the gas turbine are measured by one or more appropriate sensors (not shown). As soon as the signals of the sensors are validated, for example by comparing the results of several sensors, the output signal $CO_{EM}$ of these sensors are submitted to a feedback controller 67 and compared with the maximum allowable CO emissions $CO_{max}$.

Briefly said the feedback controller 67 increases the target hot gas temperature THGmin of the CO min load controller 65 if the CO emissions at minimum load of the gas turbine (see the input of the switch 43 ($GT_{min\ load}$)) are higher than the maximum allowable CO emissions COmax (see figure 3) via a discrete integrator 69 that changes its output stepwise and not in a quasi-analogous way.

The feedback controller 67 decreases the minimum hot gas temperature THGmin of the CO min load controller if the CO emissions at minimum load of the gas turbine are lower than the COmax limit (see figure 3). To reduce the number of changes a hysteresis is integrated in the feedback controller 67.

Once the CO min load control has reached a steady state using the claimed adaptive algorithm, the CO emissions are below the maximum allowable CO emissions $CO_{max}$ (see figure 3) .

This means that the claimed method combines a fast model-based CO min load control with a closed loop control of the model 57 to keep the model 57 precise even under changing conditions.

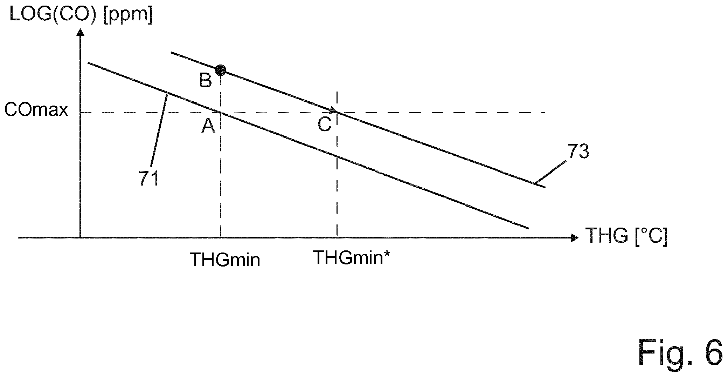

Figure 6 illustrates the effect of the claimed adaptive algorithm on hot gas temperature THG and CO emissions of the CO model based on figure 3 drifts away from the initial one. The initial model is represented in figure 6 by a first line 71.

For example, if the net calorific value LHV of the fuel gas is unknown and it varies with time, the resulting hot gas temperature THG will drift. Assuming, the LHV of the current fuel gas is lower than the LHV of the fuel gas which the CO model is calibrated to, at the same hot gas temperature THG, the CO emissions will be higher due to the lower LHV, i.e. lower heating input into the combustor 4 or 15.

The CO model will drift from the first line 71 to the second line 73. As a result at constant minimum hot gas temperature THGmin, the CO emission will raise from point A to B, which is not acceptable, since B exceed the maximum CO emission limit COmax. The adaptive algorithm explained in figure 5 will increase the minimum hot gas temperature THGmin until the resulting CO emission is back to the COmax again (from the point B to C).

As soon as the CO min load controller reached its steady state, the CO emission will be around the maximum allowable CO emissions COmax and the minimum hot gas temperature THGmin will be close to the a new minimum hot gas temperature THGmin*. This means that even under changing conditions the CO emission of the gas turbine may be operated at the lowest possible hot gas temperature without exceeding the maximum allowable CO emissions COmax.

With respect to a simple CO feedback loop, which as mentioned before, is characterized by very slow response times, this concept has the advantage that the CO min load control can be fast, while only the target value for the minimum hot gas temperature THGmin is progressively adjusted when for example turbine or fuel behavior drifts, which is a slow process.

**List of Reference Numerals**

| | |
|---|---|
| 1 | compressor |
| 2 | intake air |
| 3 | compressed air |
| 4 | first combustor |
| 5 | fuel feed |
| 7 | first turbine |
| 9 | burner |
| 10 | fuel feed |
| 12 | second turbine |
| 13 | exhaust gases |

| 14 | variable compressor inlet guide vanes |
| 15 | second combustor |
| 17 | carrier-air control valve |
| 18 | shaft 18 of the gas turbine. |
| 19 | generator |
| 21 | cooling air control valve |
| 22, 23 | cooling air |
| 24 | carrier air |
| 25 | control valve |
| 26 | anti-icing line |
| 27 | main controller |
| 29 | signal lines |
| 30 | main fuel ring |
| 35 | cooling air cooler |
| 37 | individual on/off valves |
| 43 | switch |
| 44a, | b arrow |
| 45 | binary signal |
| 47 | limiter |
| 49 | box |
| 51 | box |
| 53, 55 | load [MW] |
| AP | actual power |
| 57 | hot gas temperature model |
| 59 | (PI-) controller |
| 61 | subtracting element |
| 63 | input (temperature difference [K]) |
| 65 | box |
| 67 | feedback controller |
| 69 | discrete integrator |
| 39, 71, 73 | line |
| COmax | maximum allowable CO emissions |
| COEM | measured CO emissions |
| THGmin | minimum hot gas temperature |
| LSP | load set point |
| LSPmin | minimum load set point |
| LSPmax | maximum load set point |
| LSPlim | limited load set point |
| n: | rotor speed |
| Tamb: | ambient temperature |
| pamb: | ambient pressure |
| hamb: | ambient humidity |
| VIGV: | variable inlet guide vane position |
| $m_r$: | air split ratio (into the combustor) |
| $m_f$: | fuel mass flow |
| WI: | fuel wobble index |
| LHV: | fuel low heating value |
| $b_s$: | burner fuel stage ratio |
| $\gamma$: | cooling air leakage degradation rate |
| $\lambda$: | air-fuel equivalence ratio |

**Claims**

1.  A method for controlling part load operation of a gas turbine, wherein the gas turbine comprises active burners (9) and a main controller (27), the method **characterized by** comprising the steps of:

    - calculating an actual load set point (LSP) through the main controller (27);

- calculating, based on a hot gas temperature model (57), an actual hot gas temperature (THG) of the active burners (9), wherein said calculated actual hot gas temperature (THG) is compared with a minimum limit of the hot gas temperature (THGmin) in a subtracting element (61) to calculate a difference (63) which serves as an input to a controller (59) which determines a delta load (55) based on said difference (63);
- generating, based on said delta load (55), a minimum load set point (LSPmin);

wherein said actual load set point (LSP) is kept equal to or greater than said minimum load set point (LSPmin).

2. Method according to claim 1, wherein said controller (59) switches off at least one burner and/or adjusts fuel staging parameter when the difference (63) becomes negative and which switches on at least one burner and/or readjusts a fuel staging parameter when the difference (63) exceeds a threshold value.

3. Method according to claim 1 or 2, wherein a first target load (53) is generated based on the actual power $AP_0$ [MW] of the gas turbine at the moment ($t=T_0$) the claimed method is activated.

4. Method according to claim 3, wherein the minimum load set point (LSPmin) is equal to the sum of the first target load (53) and the delta load (55).

5. Method according to claim 3, wherein the first target load (53) is equal to the actual power ($AP_0$) of the gas turbine minus an offset.

6. Method according to one of the foregoing claims, wherein the hot gas temperature model (57) depends from at least one of the following inputs:

   n: rotor speed
   Tamb: ambient temperature
   pamb: ambient pressure
   hamb: ambient humidity
   VIGV: variable inlet guide vane position
   $m_r$: air split ratio (into the combustor)
   $m_f$: fuel mass flow
   WI: fuel Wobbe index
   LHV: fuel low heating value
   $b_s$: burner fuel stage ratio
   $\gamma$: cooling air leakage degradation rate.

7. Method according to one of the foregoing claims, wherein the minimum hot gas temperature (THGmin) is adapted by comparing the CO emissions ($CO_{EM}$) of the exhaust gas (13) of the gas turbine with the maximum allowable CO emissions (COmax).

8. Method according to claim 7, wherein the minimum hot gas temperature (THGmin) is raised if the CO emissions ($CO_{EM}$) are higher than the maximum allowable CO emissions (COmax).

9. Method according to claim 7 or 8, wherein the minimum hot gas temperature (THGmin) is lowered if the CO emissions ($CO_{EM}$) are lower than the maximum allowable CO emissions (COmax).

10. A CO min load controller for a gas turbine, the gas turbine including activable burners (9) and a main controller (27) which is configured to calculate an actual load set point (LSP), the CO min load controller being **characterized in that** it comprises:

    - a hot gas temperature model (57) configured to calculate an actual hot gas temperature (THG) of the active burners (9);
    - a subtracting element (61) to calculate a difference (63) between said calculated actual hot gas temperature (THG) and a minimum limit of the hot gas temperature (THGmin);
    - a controller (59) which determines a delta load (55) based on said difference (63);
    - a box (49) configured to generate, based on said delta load (55), a minimum load set point (LSPmin);
    - a limiter (47) configured to keep said actual load set point (LSP) equal to or greater than said minimum load set point (LSPmin).

**11.** A gas turbine, **characterized in that** it comprises a CO min load controller according to the preceding claim.

**12.** Gas turbine according to claim 11, comprising at least one combustor (4, 15), at least one compressor (1) and at least one turbine (7, 12).

**Patentansprüche**

**1.** Verfahren zur Steuerung eines Teillastbetriebs einer Gasturbine, wobei die Gasturbine aktive Brenner (9) und eine Hauptsteuerung (27) umfasst und das Verfahren durch folgende Schritte gekennzeichnet ist:

- Berechnen eines effektiven Lastsollwertes (LSP) mittels der Hauptsteuerung (27);
- Berechnen einer Ist-Heißgastemperatur (THG) der aktiven Brenner (9) auf der Basis eines Heißgastemperaturmodells (57), wobei die berechnete Ist-Heißgastemperatur (THG) mit einer Mindestgrenze der Heißgastemperatur (THGmin) in einem Subtraktionselement (61) verglichen wird, um eine Differenz (63) zu berechnen, die als Eingangsgröße in eine Steuereinheit (59) dient, welche anhand dieser Differenz (63) eine Delta-Last (55) ermittelt;
- Generieren eines Mindestlast-Sollwertes (LSPmin) auf der Basis der Delta-Last (55);

wobei der effektive Lastsollwert (LSP) gleich oder größer als der Mindestlast-Sollwert (LSPmin) gehalten wird.

**2.** Verfahren nach Anspruch 1, wobei die Steuereinheit (59) mindestens einen Brenner ausschaltet und/oder Brennstoff-Stufungsparameter reguliert, wenn die Differenz (63) negativ wird, und mindestens einen Brenner einschaltet und/oder einen Brennstoff-Stufungsparameter nachreguliert, wenn die Differenz (63) einen Grenzwert überschreitet.

**3.** Verfahren nach Anspruch 1 oder 2, wobei zu dem Zeitpunkt (t=$T_0$), zu dem das beanspruchte Verfahren in Gang gesetzt wird, anhand der Ist-Leistung $AP_0$ [MW] der Gasturbine eine erste Ziellast (53) generiert wird.

**4.** Verfahren nach Anspruch 3, wobei der Mindestlast-Sollwert (LSPmin) gleich der Summe der ersten Ziellast (53) und der Delta-Last (55) ist.

**5.** Verfahren nach Anspruch 3, wobei die erste Ziellast (53) gleich der Ist-Leistung $AP_0$ der Gasturbine abzüglich eines Ausgleichs ist.

**6.** Verfahren nach einem der vorstehenden Ansprüche, wobei das Heißgastemperaturmodell (57) mindestens von einer der folgenden Eingangsgrößen abhängt:

n: Rotordrehzahl
Tamb: Umgebungstemperatur
pamb: Umgebungsdruck
hamb: Umgebungsfeuchtigkeit
VIGV: Position des verstellbaren Eintrittsleitrads
$m_r$: Luftverteilungsverhältnis (in die Brennkammer)
$m_f$: Brennstoffmassenstrom
WI: Brennstoff-Wobbe-Index
LHV: Unterer Brennstoffheizwert
$b_s$: Brenner-Brennstoffstufenverhältnis
$\gamma$: Kühlluft-Leckageverlustrate

**7.** Verfahren nach einem der vorstehenden Ansprüche, wobei die Mindest-Heißgastemperatur (THGmin) angepasst wird, indem die CO-Emissionen ($CO_{EM}$) der Abgase der Gasturbine mit den maximal zulässigen CO-Emissionen (COmax) verglichen werden.

**8.** Verfahren nach Anspruch 7, wobei die Mindest-Heißgastemperatur (THGmin) erhöht wird, wenn die CO-Emissionen ($CO_{EM}$) höher sind als die maximal zulässigen CO-Emissionen (COmax).

**9.** Verfahren nach Anspruch 7 oder 8, wobei die Mindest-Heißgastemperatur (THGmin) gesenkt wird, wenn die CO-Emissionen ($CO_{EM}$) niedriger sind als die maximal zulässigen CO-Emissionen (COmax).

**10.** CO-Mindestlaststeuerung für eine Gasturbine, wobei die Gasturbine aktivierbare Brenner (9) und eine Hauptsteuerung (27) umfasst, die dazu dient, einen effektiven Lastsollwert (LSP) zu berechnen, wobei die CO-Mindestlaststeuerung Folgendes umfasst:

- ein Heißgastemperaturmodell (57), das dazu dient, eine Ist-Heißgastemperatur (THG) der aktiven Brenner (9) zu berechnen;
- ein Subtraktionselement (61) zur Berechnung einer Differenz (63) zwischen der berechneten Ist-Heißgastemperatur (THG) und einer Mindestgrenze der Heißgastemperatur (THGmin);
- eine Steuereinheit (59), die anhand der Differenz (63) eine Delta-Last (55) bestimmt;
- eine Box (49), die dazu dient, anhand der Delta-Last (55) einen Mindestlast-Sollwert (LSPmin) zu generieren;
- einen Begrenzer (47), der dazu dient, den effektiven Lastsollwert (LSP) gleich oder größer als den Mindestlast-Sollwert (LSPmin) zu halten.

**11.** Gasturbine, welche eine CO-Mindestlaststeuerung gemäß dem vorstehenden Anspruch umfasst.

**12.** Gasturbine nach Anspruch 11, umfassend mindestens eine Brennkammer (4, 15), mindestens einen Verdichter (1) und mindestens eine Turbine (7, 12).

## Revendications

**1.** Procédé de contrôle d'une opération de chargement partiel d'une turbine à gaz, dans lequel la turbine à gaz comprend des brûleurs actifs (9) et un contrôleur principal (27), le procédé étant **caractérisé en ce qu'**il comprend les étapes qui consistent à :

- calculer un point de consigne de charge réelle (LSP) par le biais du contrôleur principal (27) ;
- calculer, sur la base d'un modèle de température de gaz chaud (57), une température de gaz chaud réelle (THG) des brûleurs actifs (9), dans lequel ladite température de gaz chaud réelle calculée (THG) est comparée avec une limite minimum de température de gaz chaud (THGmin) dans un élément de soustraction (61) afin de calculer une différence (63) qui sert d'entrée d'un contrôleur (59) qui détermine une charge delta (55) sur la base de ladite différence (63) ;
- générer, sur la base de ladite charge delta (55), un point de consigne de charge minimum (LSPmin) ;

dans lequel ledit point de consigne de charge réelle (LSP) est maintenu égal ou supérieur audit point de consigne de charge minimum (LSPmin).

**2.** Procédé selon la revendication 1, dans lequel ledit contrôleur (59) désactive au moins un brûleur et/ou ajuste un paramètre de ravitaillement en combustible lorsque la différence (63) devient négative, et déclenche au moins un brûleur et/ou réajuste un paramètre de ravitaillement en combustible lorsque la différence (63) dépasse une valeur de seuil.

**3.** Procédé selon la revendication 1 ou 2, dans lequel une première charge cible (53) est générée sur la base de la puissance réelle $AP_0$ [MW] de la turbine à gaz au moment ($t=T_0$) où le procédé est activé.

**4.** Procédé selon la revendication 3, dans lequel le point de consigne de charge minimum (LSPmin) est égal à la somme de la première charge cible (53) et de la charge delta (55).

**5.** Procédé selon la revendication 3, dans lequel la première charge cible (53) est égale à la puissance réelle ($AP_0$) de la turbine à gaz moins un écart.

**6.** Procédé selon l'une des revendications précédentes, dans lequel le modèle de température de gaz chaud (57) dépend d'au moins l'une des entrées suivantes :

n : vitesse du rotor
Tamb : température ambiante
pamp : pression ambiante
hamb : humidité ambiante
VIGV : position d'aube de guidage à entrée variable

$m_r$ : rapport de séparation d'air (dans la chambre de combustion)

$m_f$ : débit massique de combustible

WI : indice Wobbe de combustible

LHV : faible valeur calorifique du combustible

$b_s$ : rapport de ravitaillement en combustible de brûleur

$\gamma$ : taux de dégradation de fuite d'air de refroidissement.

**7.** Procédé selon l'une des revendications précédentes, dans lequel la température de gaz chaud minimum (THGmin) est adaptée en comparant les émissions de CO ($CO_{EM}$) du gaz d'échappement (13) de la turbine à gaz avec les émissions de CO maximales autorisées (COmax).

**8.** Procédé selon la revendication 7, dans lequel la température de gaz chaud minimum (THGmin) est augmentée si les émissions de CO ($CO_{EM}$) sont supérieures aux émissions de CO maximales autorisées (COmax).

**9.** Procédé selon la revendication 7 ou 8, dans lequel la température de gaz chaud minimum (THGmin) est réduite si les émissions de CO ($CO_{EM}$) sont inférieures aux émissions de CO maximales autorisées (COmax).

**10.** Contrôleur de charge minimum de CO pour turbine à gaz, la turbine à gaz comprenant des brûleurs activables (9) et un contrôleur principal (27) qui est configuré pour calculer un point de consigne de charge réelle (LSP), le contrôleur de charge minimum de CO étant **caractérisé en ce qu'**il comprend :

- un modèle de température de gaz chaud (57) configuré pour calculer une température de gaz chaud réelle (THG) des brûleurs actifs (9) ;
- un élément de soustraction (61) destiné à calculer une différence (63) entre ladite température de gaz chaud calculée (THG) et une limite minimum de la température de gaz chaud (THGmin) ;
- un contrôleur (59) qui détermine une charge delta (55) sur la base de ladite différence (63) ;
- une enceinte (49) configurée pour générer, sur la base de ladite charge delta (55), un point de consigne de charge minimum (LSPmin) ;
- un limiteur (47) configuré pour maintenir ledit point de consigne de charge réelle (LSP) égal ou supérieur audit point de consigne de charge minimum (LSPmin).

**11.** Turbine à gaz, **caractérisée en ce qu'**elle comprend un contrôleur de charge minimum de CO selon la revendication précédente.

**12.** Turbine à gaz selon la revendication 11, comprenant au moins une chambre de combustion (4, 15), au moins un compresseur (1) et au moins une turbine (7, 12).

Fig. 1

Fig. 2

EP 2 902 606 B1

Fig. 3

Fig. 4

Fig. 5

Fig. 6

EP 2 902 606 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2423489 A2
- EP 2600063 A2